(19) **Europäisches Patentamt European Patent Office Office européen des brevets**

(11) **EP 4 674 514 A1**

(12) **EUROPEAN PATENT APPLICATION**
published in accordance with Art. 153(4) EPC

(43) Date of publication:
07.01.2026 Bulletin 2026/02

(21) Application number: 24778804.5

(22) Date of filing: 15.02.2024

(51) International Patent Classification (IPC):
*B01D 53/90* (2006.01)  *B01D 53/86* (2006.01)
*F23J 15/00* (2006.01)

(52) Cooperative Patent Classification (CPC):
B01D 53/86; B01D 53/90; F23J 15/00

(86) International application number:
PCT/JP2024/005355

(87) International publication number:
WO 2024/202659 (03.10.2024 Gazette 2024/40)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 31.03.2023 JP 2023057815

(71) Applicant: **Mitsubishi Heavy Industries, Ltd. Tokyo 100-8332 (JP)**

(72) Inventors:
• **TODAKA, Shimpei**
**Tokyo 100-8332 (JP)**
• **KAKO, Hiroshi**
**Tokyo 100-8332 (JP)**

(74) Representative: **Studio Torta S.p.A.**
**Via Viotti, 9**
**10121 Torino (IT)**

(54) **DEVICE FOR INJECTING REDUCING AGENT**

(57) The object is to make the concentration of a reducing agent uniform with respect to a gas flowing through in a duct. An ammonia injection unit (20) injects, to a flue gas flowing through in a duct (3), a reducing agent having an effect of reducing nitrogen oxides contained in the flue gas. The ammonia injection unit (20) includes a plurality of injection nozzles (21) configured to inject an ammonia gas to a flue gas flowing through in the duct (3); a plurality of header pipes (22), the plurality of injection nozzles (21) being provided to each of the plurality of header pipes, and an ammonia gas flowing through inside the plurality of header pipes (22); and a header (23) provided inside the duct (3) and downstream of a gas flow in the header pipes (22) and configured to supply a reducing agent to the plurality of header pipes (22). The distance (D) from each header pipe (22) to the header (23) is a distance longer than three times of an outer diameter (d) of the header pipe (22).

FIG. 3

## Description

Technical Field

The present disclosure relates to a reducing agent injection device.

Background Art

In heat recovery steam generators (HRSG), a flue gas discharged from a gas turbine or the like passes through in a duct (a flue), heat is exchanged between the flue gas and water or steam in heat transfer pipes, and thereby steam is generated. A plurality of heat exchangers having a number of heat transfer pipes through which water or steam flows, a NOx removal device for removing nitrogen oxides (NOx) in the flue gas (denitrizing the flue gas), and the like are installed inside the duct of a heat recovery steam generator.

NOx removal devices, for example, inject a reducing agent (for example, ammonia or a urea solution) having an effect of reducing nitrogen oxides from a plurality of injection nozzles to a flue gas flowing through in a duct. Further, such NOx removal devices pass the flue gas containing the injected reducing agent through a reaction device (for example, a denitration catalyst) and thereby remove nitrogen oxides in the flue gas.

The plurality of injection nozzles for injecting a reducing agent are attached at a predetermined interval to the header pipe provided in a flue in which a flue gas flows through. A supply pipe is connected to the header pipe via a header or the like, and a reducing agent is supplied to the header pipe via the header and the supply pipe. To obtain a uniform amount of injection from respective injection nozzles, it is desirable that there be no change in the temperature of a reducing agent in the header pipe. Accordingly, the header and the supply pipe may be provided in the flue, and the temperature of a reducing agent to be supplied to the header pipe to may be sufficiently increased inside the supply pipe (for example, Patent Literature 1). Patent Literature 1 discloses a device that supplies an ammonia dilution gas via an ammonia supply pipe provided in a flue gas duct to a nozzle header pipe used for injecting the ammonia dilution gas to a flue gas.

Citation List

Patent Literature

[PTL 1]
Japanese Patent Application Laid-Open No. H06-134259

Summary of Invention

Technical Problem

When the ammonia supply pipe and the header are arranged in a flue, a flow rate of a part of the flue gas flowing through in the flue is lower due to the effect of the ammonia supply pipe. Accordingly, a region with a lower flow rate than other regions (a wake) occurs downstream of the ammonia supply pipe.

Therefore, when the ammonia supply pipe or the like are installed upstream of the header pipe as with Patent Literature 1, a part of ammonia injected from the injection nozzle provided to the header pipe will be injected into the wake. This may cause unevenness in the ammonia concentrations with respect to the flue gas flowing through in the duct. When unevenness occurs in the concentration of injected ammonia, the ammonia does not uniformly reach a reaction device provided downstream of the header pipe, and the reaction device may be unable to suitably remove nitrogen oxides in a flue gas.

In the flue, a Karman vortex that has an effect of diffusing ammonia injected from the injection nozzles is generated downstream of the header pipe. However, when the ammonia supply pipe or the like are provided at a part downstream of the header pipe and near the header pipe, the development of the Karman vortex is inhibited by the ammonia supply pipe or the like. Thus, a Karman vortex is less likely to be developed downstream of the header pipe, and this may suppress diffusion of ammonia. The suppressed diffusion of ammonia may cause unevenness in the ammonia concentration with respect to the flue gas flowing through in the duct. Thus, ammonia does not uniformly reach the reaction device, and the reaction device may be unable to suitably remove nitrogen oxides in the flue gas.

The present disclosure has been made in view of such circumstances and intends to provide a reducing agent injection device that can make the concentration of the reducing agent uniform with respect to the gas flowing through in the duct.

Solution to Problem

To solve the problem described above, the reducing agent injection device of the present disclosure employs the following solutions.

A reducing agent injection device according to one aspect of the present disclosure is a reducing agent injection device configured to inject a reducing agent to a gas flowing through in a duct, the reducing gas having an effect of reducing nitrogen oxides contained in the gas, the reducing agent injection device includes: a plurality of injection units configured to inject a reducing agent to a gas flowing through in the duct; a plurality of header pipes, the plurality of injection units being provided to each of the plurality of header pipes, and a reducing agent flowing through inside the plurality of header pipes; and a supply unit provided inside the duct and down-

3     **EP 4 674 514 A1**     4

stream of a gas flow in the header pipes and configured to supply a reducing agent to the plurality of header pipes, and a distance from each of the header pipes to the supply unit is a distance longer than three times of an outer diameter of each of the header pipes.

Advantageous Effects of Invention

According to the present disclosure, the concentration of the reducing agent with respect to the gas flowing through in the duct can be made uniform.

Brief Description of Drawings

[Fig. 1]

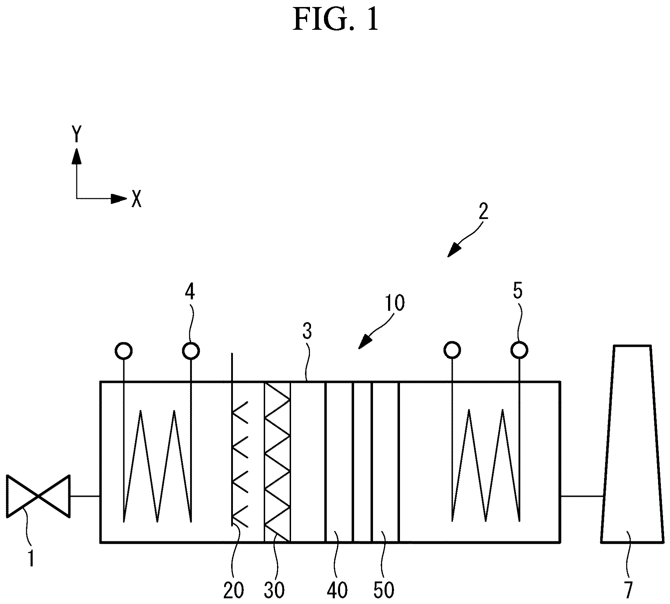

Fig. 1 is a general configuration diagram illustrating a heat recovery steam generator according to an embodiment of the present disclosure.
[Fig. 2]

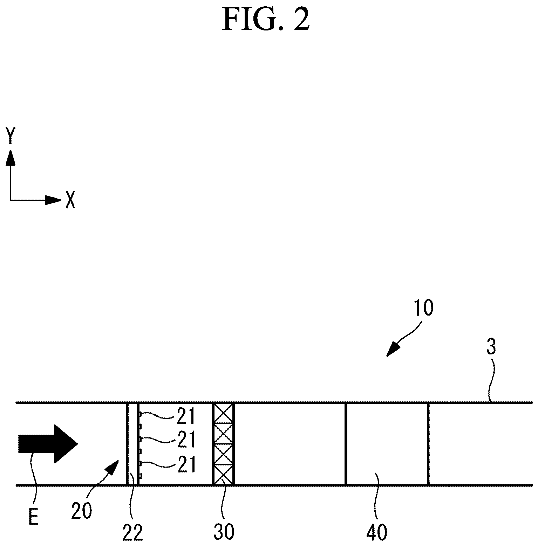

Fig. 2 is a general configuration diagram illustrating a NOx removal device according to the embodiment of the present disclosure.
[Fig. 3]

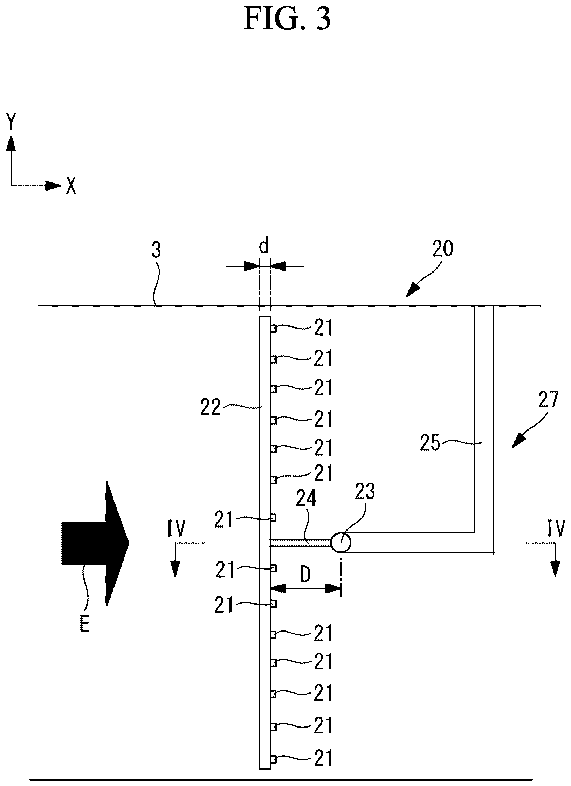

Fig. 3 is a schematic horizontal sectional view illustrating an ammonia injection unit according to the embodiment of the present disclosure.
[Fig. 4]

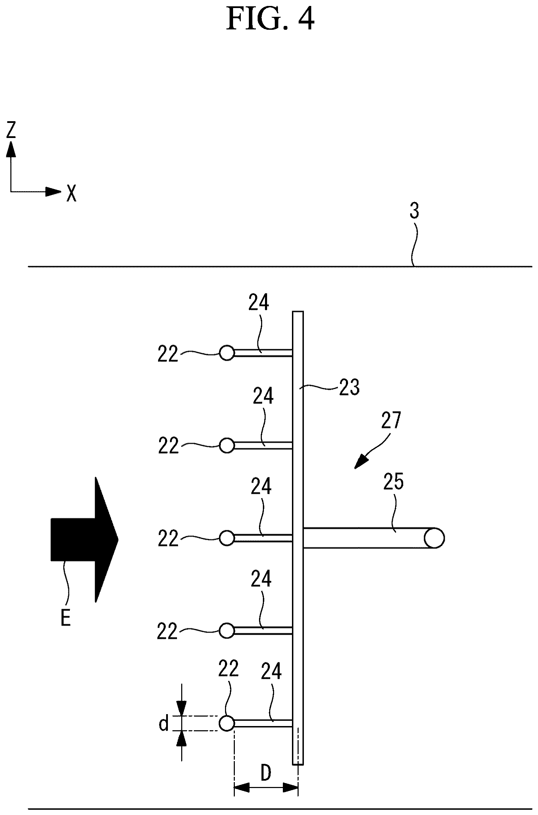

Fig. 4 is an arrow IV-IV sectional view in Fig. 3.
[Fig. 5]

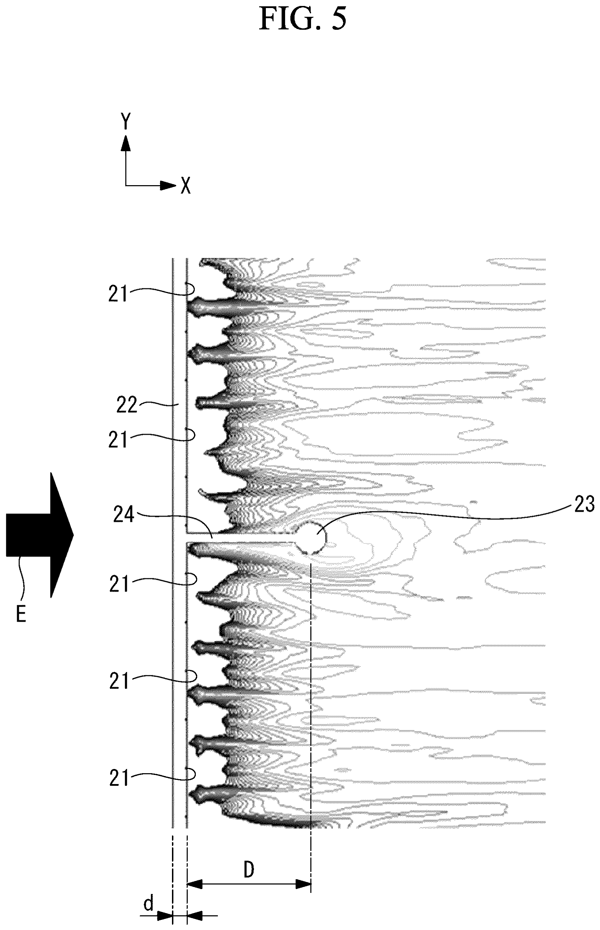

Fig. 5 is a diagram illustrating a distribution of ammonia in the ammonia injection unit according to the embodiment of the present disclosure.
[Fig. 6]

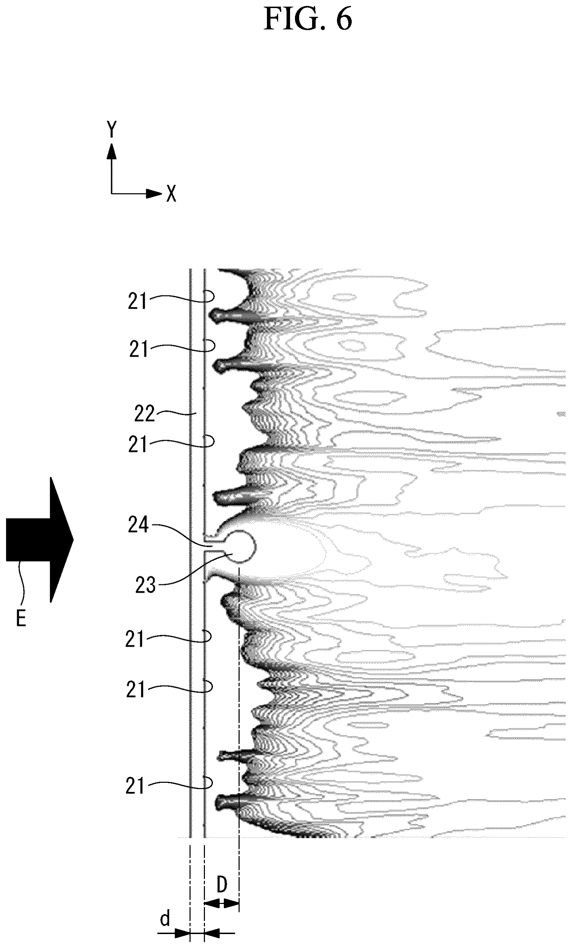

Fig. 6 is a diagram illustrating distribution of ammonia in an ammonia injection unit according to a comparative example of the present disclosure.

Description of Embodiments

A NOx removal device according to the embodiment of the present disclosure will be described below with reference to Fig. 1 to Fig. 6. In the following description and drawings, the vertical direction is referred to as a Z-axis direction, the direction of the horizontal directions in which the flue gas flows is referred to as an X-axis direction, and the direction orthogonal to the X-axis direction and the Z-axis direction is referred to as a Y-axis direction. Further, the flow direction of the flue gas is indicated by the arrow E in Fig. 2 to Fig. 6.

First, a heat recovery steam generator 2 according to the present embodiment will be described with reference to Fig. 1.

As illustrated in Fig. 1, the heat recovery steam generator 2 according to the present embodiment is a horizontal heat recovery steam generator in which the flue gas flows in the X-axis direction (a predetermined direction). In the present embodiment, the X-axis direction, which is the direction in which the flue gas flows, is the horizontal direction.

The heat recovery steam generator 2 according to the present embodiment includes a duct 3 provided extending in the X-axis direction inside which the flue gas flows through, a NOx removal device 10 provided inside the duct 3 and configured to remove nitrogen oxides (NOx) contained in the flue gas, and a first heat exchange unit 4 and a second heat exchange unit 5 provided inside the duct 3.

The first heat exchange unit 4 and the second heat exchange unit 5 have a plurality of heat transfer pipes (not illustrated) provided extending so as to intersect with the flue gas flow direction. The first heat exchange unit 4 and the second heat exchange unit 5 recover heat of the flue gas via heat exchange between a heat medium (for example, water or steam) flowing through inside the heat transfer pipes and the flue gas.

The first heat exchange unit 4 is provided upstream of the NOx removal device 10. For example, the first heat exchange unit 4 may be a superheater that superheats the heat medium flowing through inside the heat transfer pipes. The second heat exchange unit 5 is provided downstream of the NOx removal device 10. For example, the second heat exchange unit 5 may be an evaporator that evaporates the heat medium flowing through inside the heat transfer pipes.

A high-temperature combustion flue gas (a flue gas) discharged from a combustion engine 1 is introduced into the duct 3 through the inlet of the duct 3, passes through the first heat exchange unit 4, the NOx removal device 10, and the second heat exchange unit 5 in order, and is then discharged from a stack 7 via the outlet of the duct 3.

Next, the NOx removal device 10 will be described in detail with reference to Fig. 1 to Fig. 5.

The NOx removal device 10 supplies a reducing agent (ammonia, a urea solution, or the like) having an effect of reducing nitrogen oxides to the flue gas flowing through in the duct 3, promotes a reaction between nitrogen oxides (NOx) and the reducing agent in the flue gas supplied with the reducing agent via a catalytic action of the NOx removal catalyst 40, and thereby removes or reduces nitrogen oxides in the flue gas. In the following description, an example using an ammonia gas as the reducing agent will be described. Note that the reducing agent according to the present disclosure is not limited to an ammonia gas. For example, ammonia in a liquid form may be used, or otherwise other reducing agents than ammonia may be used.

As illustrated in Fig. 1 and Fig. 2, the NOx removal device 10 includes an ammonia injection unit (a reducing agent injection device) 20, a mixer 30, a NOx removal catalyst 40, and an ammonia decomposition catalyst 50 in the duct 3 that are arranged in this order from the upstream of the flue gas flow.

The ammonia injection unit 20 injects an am-

3

monia gas in the X-axis direction into the duct 3 from the plurality of injection nozzles 21 and thereby injects an ammonia gas to the flue gas flowing through in the duct 3. The details of the ammonia injection unit 20 will be described later.

The mixer 30 is arranged so as to cover substantially the entire region of the flow path cross section of the duct 3. The ammonia gas and the flue gas that have been injected from the ammonia injection unit 20 flow into the mixer 30. The mixer 30 generates a swirling flow swirling about the central axis extending in the X-axis direction. The flue gas passing through the mixer 30 (in detail, the flue gas into which ammonia is injected) flows as a single swirling flow or a plurality of swirling flows in the space downstream of the mixer 30. In such a way, the mixer 30 generates the swirling flows to mix the flue gas and ammonia flowing through in the duct 3.

The NOx removal catalyst 40 is arranged so as to cover substantially the entire region of the flow path cross section of the duct 3. The NOx removal catalyst 40 has, for example, a rectangular frame part (not illustrated) having a rectangular cylindrical shape and a plurality of catalysts (not illustrated) provided inside the rectangular frame part. As the shape of the catalyst, a honeycomb shape or a corrugated plate shape where the flue gas can pass through in the X-axis direction are illustrated as an example, but the shape is not limited thereto. The catalyst facilitates a reduction reaction of nitrogen oxides (NOx) contained in the flue gas (combustion flue gas) passing through inside thereof to remove at least a part of the NOx. The component of the catalyst is based on, for example, titanium oxides.

The ammonia decomposition catalyst 50 is arranged so as to cover substantially the entire region of the flow path cross section of the duct 3. The ammonia decomposition catalyst 50 decomposes ammonia contained in the flue gas and thereby removes ammonia out of the flue gas. In the present embodiment, since the ammonia decomposition catalyst 50 is provided downstream of the NOx removal catalyst 40, ammonia in the flue gas that is left unreacted with the NOx removal catalyst 40 can be decomposed by the ammonia decomposition catalyst 50.

Next, the details of the ammonia injection unit 20 will be described with reference to Fig. 3 and Fig. 4. Fig. 3 is a diagram of the ammonia injection unit 20 when viewed from the top. Further, Fig. 4 is a longitudinal sectional view of the ammonia injection unit 20. In details, Fig. 4 is an arrow IV-IV sectional view in Fig. 3.

As illustrated in Fig. 3 and Fig. 4, the ammonia injection unit 20 has a plurality of injection nozzles (injection units) 21 configured to inject an ammonia gas, a plurality of header pipes 22 provided with the injection nozzles 21 and extending in the Y-axis direction, and a supply unit 27 configured to supply an ammonia gas to the header pipes 22.

The plurality of injection nozzles 21 are arranged aligned at a predetermined interval in the extending direction of the header pipe 22 (that is, the Y-axis direction). The injection nozzles 21 are provided on the face downstream of the flue gas flow of the header pipe 22. Each injection nozzle 21 may be a hole formed in the side face of the header pipe 22. The injection nozzles 21 inject an ammonia gas at a predetermined injection pressure. In detail, the injection nozzles 21 inject an ammonia gas to the downstream of the flue gas flow. The diameter of the injection hole of the injection nozzle 21 is, for example, 3 mm to 6 mm. The injection nozzle 21 injects an ammonia gas in a conical shape. Note that the diameter of the injection hole and the injection manner of the injection nozzle 21 described above are examples and are not limited thereto.

Each header pipe 22 extends in the Y-axis direction. An ammonia gas flows through inside the header pipes 22. The header pipe 22 has a circular tube shape. The outer diameter d of the header pipe 22 has a predetermined length. Further, the connecting pipes 24 are connected to respective header pipes 22.

A plurality of header pipes 22 are provided. As illustrated in Fig. 4, the plurality of header pipes 22 are arranged aligned at a predetermined interval in the Z-axis direction.

As illustrated in Fig. 3 and Fig. 4, the supply unit 27 is provided in the duct 3 and downstream of the gas flow in the header pipes 22 and supplies a reducing agent to the plurality of header pipes 22. The supply unit 27 has a header 23 connected to the plurality of header pipes 22, a connecting pipe 24 configured to connect the header pipe 22 and the header 23 to each other, and a supply pipe 25 configured to supply an ammonia gas from the outside to the header 23.

The header 23 is provided downstream of a flue gas flow in the header pipe 22. As illustrated in Fig. 4, the header 23 extends in the Z-axis direction. The connecting pipe 24 is connected to the header 23. A plurality of header pipes 22 are connected to the header 23 via the connecting pipe 24.

A plurality of headers 23 are provided. The plurality of headers 23 are arranged aligned at a predetermined interval in the Y-axis direction. Note that only one header 23 is illustrated in Fig. 3 and Fig. 4 for convenience of illustration. The supply pipe 25 is connected to each header 23 in a one-to-one manner.

The distance D from the header pipe 22 to the header 23 is a distance longer than three times of the outer diameter d of the header pipe 22. That is, Equation (1) below is established. Note that, the distance D may be the shortest distance from the downstream end of the header pipe 22 to the central axis of the header 23.

$$D > 3d \,\ldots(1)$$

The connecting pipe 24 is provided downstream of flue gas flow in the header pipe 22. The connecting pipe 24 extends in the X-axis direction. The connecting pipe 24 connects the header pipe 22 and the header 23 to each other.

A plurality of connecting pipes 24 are provided. The plurality of connecting pipes 24 are arranged aligned at a predetermined interval in the Z-axis direction.

The supply pipe 25 is provided downstream of the header 23. An ammonia gas flows through inside the supply pipe 25. The supply pipe 25 guides, to the header 23, an ammonia gas supplied from an ammonia gas supply unit (not illustrated) provided outside the duct 3. The upstream end of the supply pipe 25 is connected to the ammonia gas supply unit. The downstream end of the supply pipe 25 is connected to the face downstream of the header 23. The downstream end of the supply pipe 25 is connected to substantially the center in the Z-axis direction of the header 23. The overall length of each supply pipe 25 is set so that the ammonia gas flowing through in the supply pipe 25 is subjected to heat exchange with the flue gas flowing through outside the supply pipe 25 and thereby the temperature of the ammonia gas is increased to approximately the same temperature as that of the flue gas.

A plurality of supply pipes 25 are provided. Note that only one supply pipe 25 is illustrated in Fig. 3 and Fig. 4 for convenience of illustration. The overall lengths of respective supply pipes 25 are substantially the same. The plurality of supply pipes 25 are connected to the header 23, respectively. The supply pipe 25 and the header 23 correspond to each other in a one-to-one manner.

Next, the flow of an ammonia gas in the ammonia injection unit 20 according to the present embodiment will be described.

The ammonia gas supply unit provided outside the duct 3 introduces an ammonia gas to the supply pipe 25. The ammonia gas introduced to the supply pipe 25 flows through in the supply pipe 25. At this time, the ammonia gas is subjected to heat exchange with the flue gas flowing through outside the supply pipe 25 and thereby the temperature of the ammonia gas is increased to approximately the same temperature as that of the flue gas. The ammonia gas that has flown through in the supply pipe 25 is introduced to the header 23. The ammonia gas introduced to the header 23 flows through in the header 23 and is distributed to each header pipe 22 via the connecting pipe 24. The ammonia gas introduced to the header pipe 22 flows through in the header pipe 22 and is injected into the duct 3 from each injection nozzle. Note that, since the temperature of the ammonia gas is sufficiently raised in the supply pipe 25 and the header 23, the temperature changes little when the ammonia gas flows through in the header pipe 22.

According to the present embodiment, the following effects and advantages are achieved.

In the present embodiment, the header 23 and the supply pipe 25 are provided downstream of the header pipe 22. That is, the header pipe 22 is provided upstream of the header 23 and the supply pipe 25. Accordingly, an ammonia gas injected into the duct 3 from the injection nozzle 21 provided in the header pipe 22 can be unaffected by the wake (a low flow rate region) generated downstream of the header 23. Therefore, since the flow rate of the injected ammonia gas is made uniform, the concentration of the ammonia gas with respect to the flue gas flowing through in the duct 3 can be made uniform. Thus, the ammonia gas reaching the mixing unit or the NOx removal catalyst 40 provided downstream of the ammonia injection unit 20 can be made uniform. Thus, nitrogen oxides in the flue gas can be suitably removed in the NOx removal catalyst 40.

In the duct 3, a Karman vortex caused by the flue gas that has passed through near the header pipe 22 occurs downstream of the header pipe 22. The Karman vortex has an effect of diffusing an ammonia gas injected from the header pipe 22 into the flue gas flowing through in the duct 3. However, when the distance between the header pipe 22 and the header 23 is less than or equal to 3d, since the development of a Karman vortex is inhibited by the header 23, a Karman vortex is not stably formed. Accordingly, no Karman vortex may be stably formed in the downstream region of a portion provided with the header 23.

In contrast, in a region spaced away from the header pipe 22 by a distance longer than three times the length of the outer diameter of the header pipe 22, a stable Karman vortex street (coupled vortex shedding) is formed. Because of the formation of a Karman vortex, diffusion of ammonia is promoted.

In the present embodiment, the distance from the header pipe 22 to the header 23 is a distance longer than three times of the outer diameter of the header pipe 22. That is, the distance between the header pipe 22 and the header 23 is a distance longer than three times of the outer diameter of the header pipe 22. Accordingly, since inhibition of a Karman vortex by the header is suppressed, a Karman vortex can be easily formed. Therefore, the ammonia gas injected from the header pipe 22 can be diffused in the flue gas flowing through in the duct 3. Thus, the concentration of the ammonia gas with respect to the flue gas flowing through in the duct 3 can be made uniform. Thus, nitrogen oxides in the flue gas can be suitably removed in the NOx removal catalyst 40.

The effect of making the concentration of the ammonia gas uniform by a Karman vortex will be described in detail with reference to Fig. 5 and Fig. 6. Fig. 5 and Fig. 6 are diagrams representing lines connecting points of the same ammonia concentration. Further, a darker black line represents a higher ammonia concentration.

Fig. 5 illustrates a state where the header pipe 22 and the header 23 are arranged spaced apart from each other by the distance of 12 times the outer diameter d of the header pipe 22. That is, in Fig. 5, the header 23 and the header pipe 22 are arranged so as to establish Equation (2) below.

$$D = 12d \ldots (2)$$

As illustrated in Fig. 5, when the header pipe 22 and the header 23 are spaced away from each other by a sufficient distance, a Karman vortex is generated downstream of the header pipe 22 in substantially the entire region in the extending direction of the header pipe 22 (Y-axis direction). Thus, since the flue gas and the ammonia gas are mixed by the Karman vortex in substantially the entire region in the Y-axis direction, the concentration of ammonia in the flue gas is suitably made uniform, as illustrated in Fig. 5.

Further, in the example described in Fig. 5, the generated Karman vortex decays substantially uniformly in the Y-axis direction. Accordingly, the unevenness in the concentration of the ammonia gas in the flue gas in the Y-axis direction of the header pipe 22 is suppressed.

Further, since the flue gas and ammonia gas pass through near the header 23 in a state where both the gases are mixed to some degrees, the unevenness in the concentration of the ammonia gas in the flue gas due to the header 23 is suppressed.

In such a way, when the header pipe 22 and the header 23 are spaced away from each other by a sufficient distance, the concentration of the ammonia gas with respect to the flue gas flowing through in the duct 3 can be made uniform. Thus, nitrogen oxides in the flue gas can be suitably removed in the NOx removal catalyst 40. That is, the efficiency of NOx removal can be improved in the NOx removal catalyst 40.

On the other hand, in the comparative example in Fig. 6, the distance between the header pipe 22 and the header 23 is smaller than or equal to 3d. That is, the header 23 and the header pipe 22 are arranged so as to establish Equation (3) below.

$$D \leqq 3d \ldots (3)$$

As illustrated in Fig. 6, when the header pipe 22 and the header 23 are not spaced away from each other by a sufficient distance, a flow whose ammonia gas expands in the Y-axis direction is generated around the header 23, and the ammonia gas injected from the injection nozzle 21 is divided by the header 23 before sufficiently mixed with the flue gas.

Further, generation of a Karman vortex is inhibited by the header 23. Thus, since a Karman vortex is less likely to be generated downstream of the header 23, diffusion of ammonia is suppressed. Thus, as illustrated in Fig. 6, the flue gas and the ammonia gas are not suitably mixed in the region in which no Karman vortex is generated. This causes unevenness in the ammonia concentration.

In such a way, when the header pipe 22 and the header 23 are not spaced away from each other by a sufficient distance, this causes unevenness in the concentration of the ammonia gas with respect to the flue gas flowing through in the duct 3. Thus, the efficiency of NOx removal in the NOx removal catalyst 40 may be reduced.

Further, in the present embodiment, the supply pipe 25 is provided downstream of the header 23. That is, the distance from the header pipe 22 to the supply pipe 25 is also a distance longer than three times of an outer diameter d of the header pipe 22. Accordingly, the supply pipe 25 also does not inhibit generation of a Karman vortex. Thus, when both the header 23 and the supply pipe 25 are provided at positions more distant from the header pipe 22 than 3d, a Karman vortex can be more suitably generated. Therefore, an ammonia gas injected from the header pipe 22 can be more suitably diffused in the flue gas flowing through in the duct 3. Thus, the concentration of the ammonia gas with respect to the flue gas flowing through in the duct 3 can be more suitably made uniform.

Note that the present disclosure is not limited to each embodiment described above, and modification can be made as appropriate within the scope not departing from the spirit thereof.

For example, although the example in which the NOx removal device is provided inside the horizontal duct through which the flue gas flows in the horizontal direction has been described in the above embodiment, the present disclosure is not limited thereto. For example, the NOx removal device may be provided inside the vertical duct through which the flue gas flows in the vertical direction.

Further, although the example in which the header pipe 22 and the header 23 are arranged spaced apart by the distance of 12 times the outer diameter d of the header pipe 22 has been described in Fig. 5, the present disclosure is not limited thereto. The header pipe 22 and the header 23 may be arranged spaced apart by a distance sufficient to allow a Karman vortex to naturally disappear (the distance longer than three times the outer diameter of the header pipe 22).

The reducing agent injection device according to the embodiment described above is understood as follows, for example.

The reducing agent injection device according to the first aspect of the present disclosure is a reducing agent injection device (20) configured to inject a reducing agent to a gas flowing through in a duct (3), the reducing agent having an effect of reducing nitrogen oxides contained in the gas, the reducing agent injection device (20) includes: a plurality of injection units (21) configured to inject a reducing agent to a gas flowing through in the duct; a plurality of header pipes (22), the plurality of injection units being provided to each of the plurality of header pipes, and a reducing agent flowing through inside the plurality of header pipes; and a supply unit (27) provided inside the duct and downstream of a gas flow in the header pipes and configured to supply a reducing agent to the plurality of header pipes, and a distance from each of the header pipes to the supply unit is a distance longer than three times of an outer diameter of each of the header pipes.

In the above configuration, the supply unit is provided downstream of the header pipes. That is, the header pipes are provided upstream of the supply unit. Accordingly, a reducing agent injected from the injection units provided in the header pipes can be unaffected by the wake (a low flow rate region) generated downstream of the supply unit. Therefore, the concentration of the reducing agent with respect to the gas flowing through in duct can be made uniform.

In the duct, a Karman vortex caused by the gas that has passed through near the header pipe occurs downstream of the header pipe 22. The Karman vortex has an effect of diffusing a reducing agent injected from the header pipe into the gas flowing through in the duct. However, when the distance between the header pipe and the supply unit is less than or equal to 3d, since the development of a Karman vortex is inhibited by the supply unit, a Karman vortex is not stably formed. Accordingly, no Karman vortex may be stably formed in the downstream region of a portion provided with the supply unit.

In contrast, in a region spaced away from the header pipe by a distance longer than three times the length of the outer diameter of the header pipe, a stable Karman vortex street (coupled vortex shedding) is formed. Because of the formation of a Karman vortex, diffusion of a reducing agent is promoted.

In the above configuration, the distance from the header pipe to the supply unit is a distance longer than three times of the outer diameter of the header pipe. That is, the distance between the header pipe and the supply unit is a distance longer than three times of the outer diameter of the header pipe. Accordingly, since inhibition of a Karman vortex by the header is suppressed, a Karman vortex can be easily formed. Therefore, the reducing agent injected from the header pipe can be diffused in the gas flowing through in the duct. Thus, the concentration of the reducing agent with respect to the gas flowing through in the duct can be made uniform.

In the reducing agent injection device according to the second aspect of the present disclosure, in the first aspect described above, the supply unit has a header and a supply pipe, the plurality of header pipes being connected to the header, the header being configured to supply a reducing agent to the plurality of header pipes, and the supply pipe being configured to guide the reducing agent from outside of the duct to the header, and a distance from each of the plurality of header pipes to the header and the supply pipe is a distance longer than three times of an outer diameter of each of the plurality of header pipes.

In the above configuration, the distance from the header pipes to the header and the supply pipe is a distance longer than three times of the outer diameter of the header pipe. In such a way, because both the header and the supply pipe are provided at positions more distant from the header pipe than three times of the outer diameter of the header pipe, a Karman vortex can be more suitably generated and maintained. Therefore, a reducing agent injected from the header pipe can be more suitably diffused in the gas flowing through in the duct. Thus, the concentration of the reducing agent with respect to the gas flowing through in the duct can be more suitably made uniform.

Reference Signs List

| 1 | combustion engine |
|---|---|
| 2 | heat recovery steam generator |
| 3 | duct |
| 4 | first heat exchange unit |
| 5 | second heat exchange unit |
| 7 | stack |
| 10 | NOx removal device |
| 20 | ammonia injection unit (reducing agent injection device) |
| 21 | injection nozzle (injection unit) |
| 22 | header pipe |
| 23 | header |
| 24 | connecting pipe |
| 25 | supply pipe |
| 27 | supply unit |
| 30 | mixer |
| 40 | NOx removal catalyst |
| 50 | ammonia decomposition catalyst |

**Claims**

1. A reducing agent injection device configured to inject a reducing agent to a gas flowing through in a duct, the reducing agent having an effect of reducing nitrogen oxides contained in the gas, the reducing agent injection device comprising:

    a plurality of injection units configured to inject a reducing agent to a gas flowing through in the duct;
    a plurality of header pipes, the plurality of injection units being provided to each of the plurality of header pipes, and a reducing agent flowing through inside the plurality of header pipes; and
    a supply unit provided inside the duct and downstream of a gas flow in the header pipes and configured to supply a reducing agent to the plurality of header pipes,
    wherein a distance from each of the header pipes to the supply unit is a distance longer than three times of an outer diameter of each of the header pipes.

2. The reducing agent injection device according to claim 1,

    wherein the supply unit has a header and a supply pipe, the plurality of header pipes being connected to the header, the header being configured to supply a reducing agent to the plurality of header pipes, and the supply pipe being configured to guide the reducing agent from outside of the duct to the header, and

wherein a distance from each of the plurality of header pipes to the header and the supply pipe is a distance longer than three times of an outer diameter of each of the plurality of header pipes.

# FIG. 1

FIG. 2

# FIG. 3

# FIG. 4

# FIG. 5

# FIG. 6

## INTERNATIONAL SEARCH REPORT

| | International application No. |
|---|---|
| | **PCT/JP2024/005355** |

**A. CLASSIFICATION OF SUBJECT MATTER**

*B01D 53/90*(2006.01)i; *B01D 53/86*(2006.01)i; *F23J 15/00*(2006.01)i
FI: B01D53/90 ZAB; B01D53/86 222; F23J15/00 A

According to International Patent Classification (IPC) or to both national classification and IPC

**B. FIELDS SEARCHED**

Minimum documentation searched (classification system followed by classification symbols)

B01D53/90; B01D53/54; B01D53/86; B05B1/00; F16L41/00; F23J15/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 60-12120 A (BABCOCK HITACHI KK) 22 January 1985 (1985-01-22) | 1 |
| | claims 1-2, p. 2, lower left column, line 6 to lower right column, line 14, fig. 6 | |
| Y | claims 1-2, p. 2, lower left column, line 6 to lower right column, line 14, fig. 6 | 1-2 |
| Y | US 2013/0104519 A1 (ZHANG, Hua) 02 May 2013 (2013-05-02) | 1-2 |
| | claims 9-11, paragraphs [0003], [0030], [0034], fig. 4 | |
| A | Microfilm of the specification and drawings annexed to the request of Japanese Utility Model Application No. 78707/1984 (Laid-open No. 193222/1985) (MITSUBISHI HEAVY INDUSTRIES, LTD.) 23 December 1985 (1985-12-23), entire text, all drawings | 1-2 |
| A | WO 2020/153304 A1 (MITSUBISHI HITACHI POWER SYSTEMS, LTD.) 30 July 2020 (2020-07-30) | 1-2 |
| | entire text, all drawings | |
| A | JP 11-347367 A (BABCOCK HITACHI KK) 21 December 1999 (1999-12-21) | 1-2 |
| | entire text, all drawings | |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 April 2024** | **23 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/005355**

| Patent document cited in search report | | | Publication date (day/month/year) | Patent family member(s) | | | Publication date (day/month/year) |
|---|---|---|---|---|---|---|---|
| JP | 60-12120 | A | 22 January 1985 | (Family: none) | | | |
| US | 2013/0104519 | A1 | 02 May 2013 | EP | 2587011 | A1 | |
| | | | | CN | 103075232 | A | |
| JP | 60-193222 | U1 | 23 December 1985 | (Family: none) | | | |
| WO | 2020/153304 | A1 | 30 July 2020 | JP | 2020-116491 | A | |
| JP | 11-347367 | A | 21 December 1999 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06134259 A